# EUROPEAN PATENT APPLICATION

(11) **EP 4 815 009 A1**
(43) Date of publication of application: **30.09.2026**
(21) Application number: 24920453.8
(22) Date of filing: 24.01.2024
(51) Int. Cl.: H01G 4/30

(54) **MULTILAYER CERAMIC CAPACITOR**

(71) Applicant: Murata Manufacturing Co., Ltd., Nagaokakyo-shi, Kyoto 617-8555 (JP)
(72) Inventor: OKUTANI, Chihiro, Nagaokakyo-shi, Kyoto 617-8555 (JP); FUJITA, Yukihiro, Nagaokakyo-shi, Kyoto 617-8555 (JP); YAMATO, Ryutaro, Nagaokakyo-shi, Kyoto 617-8555 (JP); MAKI, Yusuke, Nagaokakyo-shi, Kyoto 617-8555 (JP)
(74) Representative: Zimmermann, Tankred Klaus
(86) International application number: PCT/JP2024/002012
(87) International publication number: WO 2025/158566

(57) **Abstract**

A first end surface (T) at a side of a first main surface (101) of each of a plurality of first via conductors (140) and a plurality of second via conductors (150) is exposed at the first main surface (101). A second end surface (B) at a side of a second main surface (102) of each of the plurality of first via conductors (140) and the plurality of second via conductors (150) is covered with a second outer layer portion (112). The second end surface (B) of at least one of the plurality of first via conductors (140) and the plurality of second via conductors (150) is convexly curved toward the second main surface (102) in a direction of layering. **In** the second main surface (102), when viewed from the direction of layering, with an area superimposed on an inner layer portion (E) being defined as a first area (A1), an area not superimposed on the inner layer portion (E) being defined as a second area (A2), and an area superimposed on the at least one of the plurality of first via conductors (140) and the plurality of second via conductors (150) being defined as a third area (A3), a recess (C) recessed in the direction of layering is provided in the second area (A2), and a projection (P) that projects in the direction of layering while the projection is located in the recess (C) is formed in the third area (A3).

## Description

### TECHNICAL FIELD

The present invention relates to a multilayer ceramic capacitor.

### BACKGROUND ART

Japanese Patent Laid-Open No. 2021-48261 (PTL 1) is one of prior art documents that disclose a configuration of a multilayer capacitor. A multilayer capacitor described in PTL 1 includes a multilayer body, a plurality of first outer electrodes and a plurality of second outer electrodes, a plurality of first via conductors, and a plurality of second via conductors. In the multilayer body, a plurality of dielectric layers, a plurality of first inner electrodes, and a plurality of second inner electrodes are layered. The plurality of first outer electrodes and the plurality of second outer electrodes are provided on an outer surface of the multilayer body. The plurality of first via conductors electrically connect the first outer electrodes to the plurality of first inner electrodes. The plurality of second via conductors electrically connect the second outer electrodes to the plurality of second inner electrodes. Through holes are provided in the second inner electrodes, and the first via conductors pass through the through holes with the first via conductors being insulated from the second inner electrodes. Through holes are provided in the first inner electrodes, and the second via conductors pass through the through holes with the second via conductors being insulated from the first inner electrodes. The first outer electrodes and the second outer electrodes are not provided on one principal surface and are only provided on the other principal surface.

### CITATION LIST

### PATENT LITERATURE

PTL 1: Japanese Patent Laid-Open No. 2021-48261

### SUMMARY OF INVENTION

### TECHNICAL PROBLEM

At positions around the first via conductors and the second via conductors, the through holes are provided in the first inner electrode layers or the second inner electrode layers, and hence a thickness of the multilayer body is smaller than in an inner layer portion where first inner electrode layers and second inner electrode layers are layered as being opposed to each other to form a capacitance. Therefore, at a principal surface where the first via conductors and the second via conductors are not exposed, a depression may occur in a portion smaller in thickness of the multilayer body. In this case, in holding the principal surface with a suction nozzle, the suction nozzle cannot be brought in intimate contact with the principal surface where flatness is low due to the depression and it becomes difficult to hold a multilayer ceramic capacitor in a stable manner.

The present invention was made in view of problems above, and an object of the present invention is to provide a multilayer ceramic capacitor improved in flatness of a main surface where a via conductor is not exposed.

### SOLUTION TO PROBLEM

A multilayer ceramic capacitor based on the present invention includes a multilayer body, a plurality of first via conductors, and a plurality of second via conductors. The multilayer body includes a plurality of first internal electrode layers and a plurality of second internal electrode layers alternately layered in a direction of layering with dielectric layers being interposed, and includes a first main surface and a second main surface, the second main surface being located opposite to the first main surface in the direction of layering. The plurality of first via conductors are provided inside the multilayer body and electrically connected to the plurality of first internal electrode layers. The plurality of second via conductors are provided inside the multilayer body and electrically connected to the plurality of second internal electrode layers. The multilayer body includes an inner layer portion, a first outer layer portion, and a second outer layer portion. In the inner layer portion, opposing portions where the first internal electrode layers and the second internal electrode layers are opposed to each other are layered in the direction of layering. The first outer layer portion defines the first main surface while the first outer layer portion is adjacent to the inner layer portion in the direction of layering. The second outer layer portion defines the second main surface while the second outer layer portion is adjacent to the inner layer portion in the direction of layering. A first end surface at a first main surface side of each of the plurality of first via conductors and the plurality of second via conductors is exposed at the first main surface. A second end surface at a second main surface side of each of the plurality of first via conductors and the plurality of second via conductors is covered with the second outer layer portion. The second end surface of at least one of the plurality of first via conductors and the plurality of second via conductors is convexly curved toward the second main surface in the direction of layering. In the second main surface, with an area superimposed on the inner layer portion in the direction of layering being defined as a first area, an area not superimposed on the inner layer portion in the direction of layering being defined as a second area, and an area superimposed on the at least one of the plurality of first via conductors and the plurality of second via conductors in the direction of layering being defined as a third area, a recess recessed in the direction of layering is provided in the second area, and a projection that projects in the direction of layering while the projection is located in the recess is formed in the third area.

### ADVANTAGEOUS EFFECTS OF INVENTION

According to the present invention, flatness of a main surface where a via conductor is not exposed can be improved.

### BRIEF DESCRIPTION OF DRAWINGS

Fig. 1 is a plan view of a multilayer ceramic capacitor according to one embodiment of the present invention viewed from a first main surface side.
Fig. 2 is a cross-sectional view of the multilayer ceramic capacitor in Fig. 1 viewed from a direction shown with an arrow II-II.
Fig. 3 is a bottom view of the multilayer ceramic capacitor according to one embodiment of the present invention viewed from a second main surface side.
Fig. 4 is a cross-sectional view showing as being enlarged, surroundings of a second via conductor in Fig. 2.
Fig. 5 is a flowchart showing a method of manufacturing a multilayer ceramic capacitor according to one embodiment of the present invention.
Fig. 6 shows an image obtained by zoomed image capture of a second main surface of a multilayer ceramic capacitor according to an Example.
Fig. 7 shows an image obtained by zoomed image capture of a vertical cross-section of the multilayer ceramic capacitor along a line L shown in Fig. 6.
Fig. 8 is a diagram showing transition of a height, with a position lowest in a recess in the second main surface being defined as a reference, in a section from a start point S to an end point F of line L shown in Fig. 6.
Fig. 9 is a diagram for illustrating a method of measuring dimensional relation between a recess and a projection.
Fig. 10 is a plan view of a multilayer ceramic capacitor according to a modification of one embodiment of the present invention viewed from the first main surface side.

### DESCRIPTION OF EMBODIMENTS

A multilayer ceramic capacitor according to one embodiment of the present invention will be described below with reference to the drawings. In the description of the embodiment below, the same or corresponding elements in the drawings have the same reference characters allotted and description thereof will not be repeated.

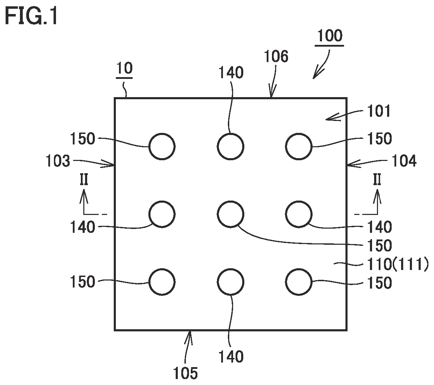

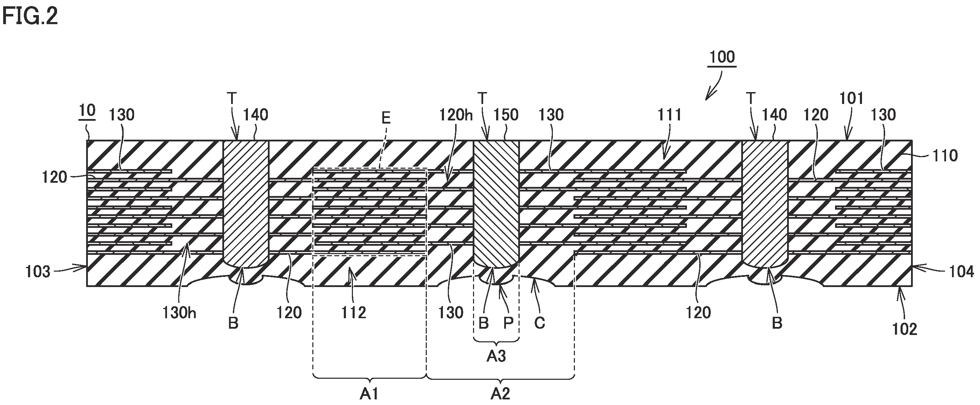

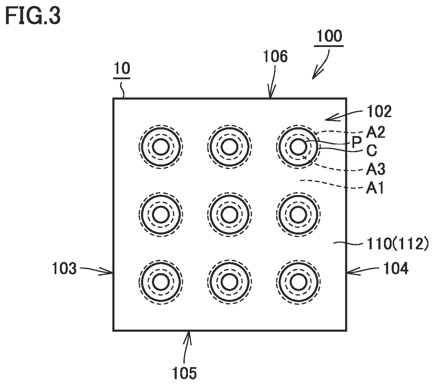

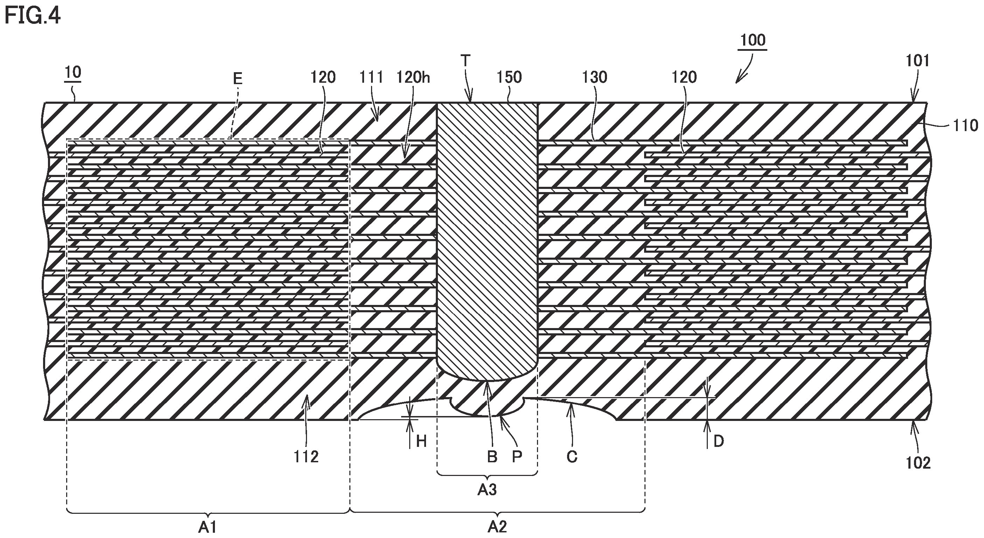

Fig. 1 is a plan view of a multilayer ceramic capacitor according to one embodiment of the present invention viewed from a first main surface side. Fig. 2 is a cross-sectional view of the multilayer ceramic capacitor in Fig. 1 viewed from a direction shown with an arrow II-II. Fig. 3 is a bottom view of the multilayer ceramic capacitor according to one embodiment of the present invention viewed from a second main surface side. Fig. 4 is a cross-sectional view showing as being enlarged, surroundings of a second via conductor in Fig. 2.

As shown in Figs. 1 to 4, a multilayer ceramic capacitor 100 according to one embodiment of the present invention includes a multilayer body 10, a plurality of first via conductors 140, and a plurality of second via conductors 150.

As shown in Figs. 2 and 4, multilayer body 10 includes a plurality of first internal electrode layers 120 and a plurality of second internal electrode layers 130 alternately layered in a direction of layering with dielectric layers 110 being interposed, and includes a first main surface 101 and a second main surface 102 located opposite to first main surface 101 in the direction of layering.

Any material may be employed for dielectric layer 110, and the dielectric layer is composed of a ceramic material mainly containing, for example, BaTiO₃, CaTiO₃, SrTiO₃, SrZrO₃, CaZrO₃, or the like. A sub component lower in content than the main component, which is selected from the group consisting of an Mn compound, an Fe compound, a Cr compound, a Co compound, and an Ni compound, may be added to these main components.

Multilayer body 10 may be in any shape. In the present embodiment, multilayer body 10 is in a rectangular parallelepiped shape as a whole. The rectangular parallelepiped shape as a whole refers, for example, to a shape which is not a perfect rectangular parallelepiped shape but is a shape that includes six surfaces and can be regarded as the rectangular parallelepiped as a whole, like a rectangular parallelepiped shape with a rounded corner and a rounded ridgeline. Therefore, multilayer body 10 has first main surface 101, second main surface 102, a first side surface 103, a second side surface 104, a third side surface 105, and a fourth side surface 106.

First side surface 103 to fourth side surface 106 of multilayer body 10 define four side surfaces which are surfaces other than first main surface 101 and second main surface 102 of the surfaces of multilayer body 10. In other words, multilayer body 10 further includes first side surface 103 to fourth side surface 106 which are the four side surfaces that connect first main surface 101 and second main surface 102 to each other. First side surface 103 is opposed to second side surface 104 and third side surface 105 is opposed to fourth side surface 106. Though first side surface 103 to fourth side surface 106 of multilayer body 10 are orthogonal to each of first main surface 101 and second main surface 102 in the present embodiment, they do not have to be orthogonal thereto.

Multilayer body 10 may have any dimension. For example, a dimension in a longitudinal direction of a rectangle when viewed from a side of first main surface 101 can be not smaller than 0.3 mm and not larger than 3.0 mm, a dimension in a lateral direction thereof can be not smaller than 0.3 mm and not larger than 3.0 mm, and a dimension in the direction of layering of dielectric layers 110, first internal electrode layers 120, and second internal electrode layers 130 can be not smaller than 50 µm and not larger than 200 µm. The dimension of multilayer body 10 in the direction of layering refers to a maximum thickness of multilayer body 10.

Each of the plurality of first internal electrode layers 120 and the plurality of second internal electrode layers 130 has a rectangular outer shape. As shown in Figs. 2 and 4, a plurality of first through holes 120h are provided in each of the plurality of first internal electrode layers 120 for insertion of the plurality of second via conductors 150. A plurality of second through holes 130h are provided in each of the plurality of second internal electrode layers 130 for insertion of the plurality of first via conductors 140.

Any material may be employed for first internal electrode layer 120 and second internal electrode layer 130, and the material contains as a main component, for example, metal such as Ni, Cu, Ag, Pd, Pt, Fe, Ti, Cr, Sn, or Au, an alloy containing such metal, or the like. First internal electrode layer 120 and second internal electrode layer 130 may contain, as a common material, a ceramic material the same as dielectric ceramic contained in dielectric layer 110. In that case, a ratio of the common material contained in first internal electrode layer 120 and second internal electrode layer 130 is, for example, not higher than 20 vol%.

Each of first internal electrode layer 120 and second internal electrode layer 130 may have any thickness, and the thickness can be, for example, approximately not smaller than 0.3 µm and not larger than 1.0 µm. Any number of first internal electrode layers 120 and any number of second internal electrode layers 130 may be provided, and the total number of internal electrode layers can be, for example, approximately not smaller than ten and not larger than one hundred and fifty.

As shown in Figs. 2 and 4, multilayer body 10 includes an inner layer portion E, a first outer layer portion 111, and a second outer layer portion 112. In inner layer portion E, opposing portions where first internal electrode layers 120 and second internal electrode layers 130 are opposed to each other are layered in the direction of layering. First outer layer portion 111 defines first main surface 101 while it is adjacent to inner layer portion E in the direction of layering. Second outer layer portion 112 defines second main surface 102 while it is adjacent to inner layer portion E in the direction of layering. Each of first outer layer portion 111 and second outer layer portion 112 is formed from dielectric layer 110.

The plurality of first via conductors 140 are provided inside multilayer body 10 and electrically connected to the plurality of first internal electrode layers 120. The plurality of first via conductors 140 pass through second through holes 130h provided in each of the plurality of second internal electrode layers 130 and they are isolated from the plurality of second internal electrode layers 130. As shown in Fig. 1, in the present embodiment, the plurality of first via conductors 140 are arranged in a zigzag manner along a side of first main surface 101 when viewed from the direction of layering. First internal electrode layers 120 are electrically connected to four first via conductors 140.

The plurality of second via conductors 150 are provided inside multilayer body 10 and electrically connected to the plurality of second internal electrode layers 130. The plurality of second via conductors 150 pass through first through holes 120h provided in each of the plurality of first internal electrode layers 120 and they are isolated from the plurality of first internal electrode layers 120. In the present embodiment, the plurality of second via conductors 150 are arranged in a zigzag manner along a side of first main surface 101 when viewed from the direction of layering. First via conductors 140 and second via conductors 150 are arranged as being aligned in rows and columns. Second internal electrode layers 130 are electrically connected to five second via conductors 150.

Each of the plurality of first via conductors 140 and the plurality of second via conductors 150 is provided inside multilayer body 10 in a manner extending in the direction of layering from first main surface 101 toward second main surface 102 of multilayer body 10. In other words, each of the plurality of first via conductors 140 and the plurality of second via conductors 150 is exposed at first main surface 101 of multilayer body 10 and not exposed at second main surface 102. Specifically, a first end surface T at the side of first main surface 101 of each of the plurality of first via conductors 140 and the plurality of second via conductors 150 is exposed at first main surface 101. A second end surface B at a side of second main surface 102 of each of the plurality of first via conductors 140 and the plurality of second via conductors 150 is covered with second outer layer portion 112. Short-circuiting between an electronic component arranged at the side of second main surface 102 and multilayer ceramic capacitor 100 can thus be suppressed.

As the plurality of first via conductors 140 and the plurality of second via conductors 150 are alternately arranged in the zigzag manner as above, magnetic fields induced by currents that flow through first via conductors 140 and second via conductors 150 cancel each other, so that an equivalent series inductance (ESL) of multilayer ceramic capacitor 100 can be lowered.

First via conductor 140 and second via conductor 150 may be in any shape, and they can be, for example, columnar. Each of first via conductor 140 and second via conductor 150 in that case has a diameter, for example, not smaller than 15 µm and not larger than 40 µm. A distance between first via conductor 140 and second via conductor 150 adjacent to each other, more specifically, a distance between the center of first via conductor 140 and the center of second via conductor 150, is, for example, approximately not shorter than 50 µm and not longer than 500 µm.

Any material may be employed for first via conductor 140 and second via conductor 150, and for example, metal such as Ni, Cu, Ag, Pd, Pt, Fe, Ti, Cr, Sn, or Au, an alloy containing such metal, or the like can be employed.

As shown in Figs. 2 and 4, second end surface B of at least one of the plurality of first via conductors 140 and the plurality of second via conductors 150 is convexly curved toward second main surface 102 in the direction of layering. Second end surfaces B of all of the plurality of first via conductors 140 and the plurality of second via conductors 150 are preferably convexly curved toward second main surface 102 in the direction of layering. At least one second end surface B is located at the side of second main surface 102 relative to an internal electrode layer located closest to third area A3 in the direction of layering among the plurality of first internal electrode layers 120 and the plurality of second internal electrode layers 130.

As shown in Figs. 2 to 4, in second main surface 102, when viewed from the direction of layering, with an area superimposed on inner layer portion E being defined as a first area A1, an area not superimposed on inner layer portion E being defined as a second area A2, and an area superimposed on the at least one of the plurality of first via conductors 140 and the plurality of second via conductors 150 being defined as a third area A3, a recess C recessed in the direction of layering is provided in second area A2, and a projection P that projects in the direction of layering while it is located in recess C is formed in third area A3. Third area A3 is encompassed in second area A2. Since projection P is located in recess C, a tip end of projection P is not located outside an opening end of recess C in the direction of layering.

As shown in Figs. 2 and 4, projection P is convexly curved as following second end surface B. In other words, projection P is convexly curved toward second main surface 102 in the direction of layering.

As shown in Fig. 4, a dimension of a maximum depth D of recess C in the direction of layering is, for example, not smaller than 1 µm and not larger than 2.5 µm. A dimension of a straight-line distance H in the direction of layering between the tip end of projection P and the opening end of recess C is, for example, not larger than 1.25 µm. A ratio of the dimension of straight-line distance H in the direction of layering between the tip end of projection P and the opening end of recess C to the dimension of maximum depth D of recess C in the direction of layering is, for example, not higher than 0.5. The dimension and dimensional relation should only be satisfied for at least one recess C and projection P at any vertical cross-section.

A plurality of external electrodes connected to first via conductors 140 and second via conductors 150 may be formed on first main surface 101. Any material may be employed for the external electrode. For example, the external electrode is a plated electrode formed by plating by barrel plating. Examples of a material for the plated electrode include Cu, Ni, Sn, and the like. The plated electrode may be formed from a single layer or a plurality of layers. The external electrode may be formed by firing a metal paste applied onto first main surface 101. A glassy inorganic substance may be contained as a common material in the metal paste.

A method of manufacturing multilayer ceramic capacitor 100 according to one embodiment of the present invention will now be described.

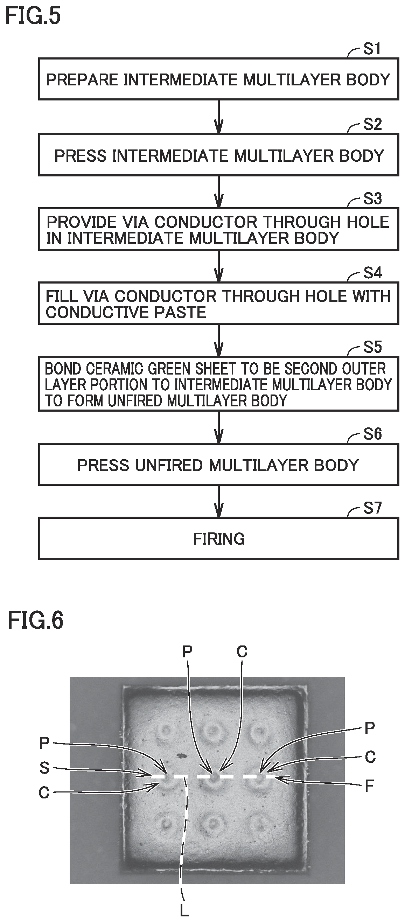

Fig. 5 is a flowchart showing a method of manufacturing a multilayer ceramic capacitor according to one embodiment of the present invention. As shown in Fig. 5, initially, an intermediate multilayer body in which ceramic green sheets to be inner layer portion E and first outer layer portion 111 are layered is prepared (S1). A conductive paste to be first internal electrode layer 120 and second internal electrode layer 130 is applied to the ceramic green sheet to be inner layer portion E, and the conductive paste is not applied to the ceramic green sheet to be first outer layer portion 111.

The intermediate multilayer body is then pressed from opposing sides in the direction of layering (S2). At this time, an elastic body provided on a rigid body abuts on the side of first main surface 101, and an elastic body provided on a rigid body abuts on the side of second main surface 102. The rigid body is formed of metal and the elastic body is formed of resin. The elastic body is, for example, a polyethylene terephthalate (PET) film. Since the number of layers of the conductive paste to be first internal electrode layer 120 and second internal electrode layer 130 in portions around first via conductor 140 and second via conductor 150 is smaller than in inner layer portion E, at the time of pressing, the portions around first via conductor 140 and second via conductor 150 are pressed by the elastic body and pushed into the intermediate multilayer body.

Via conductor through holes are then provided at positions in the intermediate multilayer body where first via conductor 140 and second via conductor 150 are to be formed (S3). The via conductor through hole is provided, for example, by irradiation with laser beams.

The via conductor through hole is then filled with a conductive paste to be first via conductor 140 and second via conductor 150 (S4). At this time, a ratio of filling the conductive paste in the via conductor through hole is increased to a range not lower than 105% and not higher than 115% of a normal filling ratio. The normal filling ratio refers to a filling ratio set for achieving such a state that the via conductor through hole is properly buried by first via conductor 140 and second via conductor 150 after firing which will be described later.

A ceramic green sheet to be second outer layer portion 112 is then bonded to the intermediate multilayer body to form an unfired multilayer body (S5). One end of the via conductor through hole at the side of second main surface 102 is thus closed. At this time, the conductive paste to be first via conductor 140 and second via conductor 150 and the ceramic green sheet to be second outer layer portion 112 may be in contact with each other or distant from each other.

The unfired multilayer body is then pressed from the opposing sides in the direction of layering (S6). At this time, an elastic body provided on a rigid body abuts on the side of first main surface 101 and an elastic body provided on a rigid body abuts on the side of second main surface 102. The rigid body is formed of metal and the elastic body is formed of resin. The elastic body is, for example, a PET film. Since the number of layers of the conductive paste to be first internal electrode layer 120 and second internal electrode layer 130 in portions around first via conductor 140 and second via conductor 150 is smaller than in inner layer portion E, at the time of pressing, the ceramic green sheet to be second outer layer portion 112 in portions that cover the portions around first via conductor 140 and second via conductor 150 is pressed by the elastic body and pushed into the unfired multilayer body. Consequently, recess C is provided in second area A2 of second main surface 102.

First end surface T of each of first via conductor 140 and second via conductor 150 that abuts on the elastic body is substantially a flat surface. Second end surfaces B of first via conductor 140 and second via conductor 150, however, swell toward second outer layer portion 112, in correspondence with increase in ratio of filling the conductive paste in the via conductor through hole. Consequently, second end surfaces B of first via conductor 140 and second via conductor 150 are convexly curved toward second main surface 102 in the direction of layering.

Furthermore, second outer layer portion 112 that covers first via conductor 140 and second via conductor 150 is convexly curved as following second end surface B. Consequently, projection P that projects in the direction of layering while it is located in recess C is formed in third area A3 of second main surface 102.

The unfired multilayer body is then fired (S7). As a result of firing, a dielectric contained in the ceramic green sheet and a conductive material contained in the conductive paste are both sintered.

Multilayer ceramic capacitor 100 is manufactured with the manufacturing method above. In forming an external electrode, a conductive paste to be the external electrode may be applied before firing, or the external electrode may be formed by plating after firing.

In multilayer ceramic capacitor 100 according to the present embodiment, first end surface T at the side of first main surface 101 of each of the plurality of first via conductors 140 and the plurality of second via conductors 150 is exposed at first main surface 101. Second end surface B at the side of second main surface 102 of each of the plurality of first via conductors 140 and the plurality of second via conductors 150 is covered with second outer layer portion 112. Second end surface B of at least one of the plurality of first via conductors 140 and the plurality of second via conductors 150 is convexly curved toward second main surface 102 in the direction of layering. In second main surface 102, when viewed from the direction of layering, with the area superimposed on inner layer portion E being defined as first area A1, the area not superimposed on inner layer portion E being defined as second area A2, and the area superimposed on the at least one of the plurality of first via conductors 140 and the plurality of second via conductors 150 being defined as third area A3, recess C recessed in the direction of layering is provided in second area A2, and projection P that projects in the direction of layering while it is located in recess C is formed in third area A3.

Flatness of second main surface 102 of multilayer ceramic capacitor 100 where first via conductors 140 and second via conductors 150 are not exposed can thus be improved.

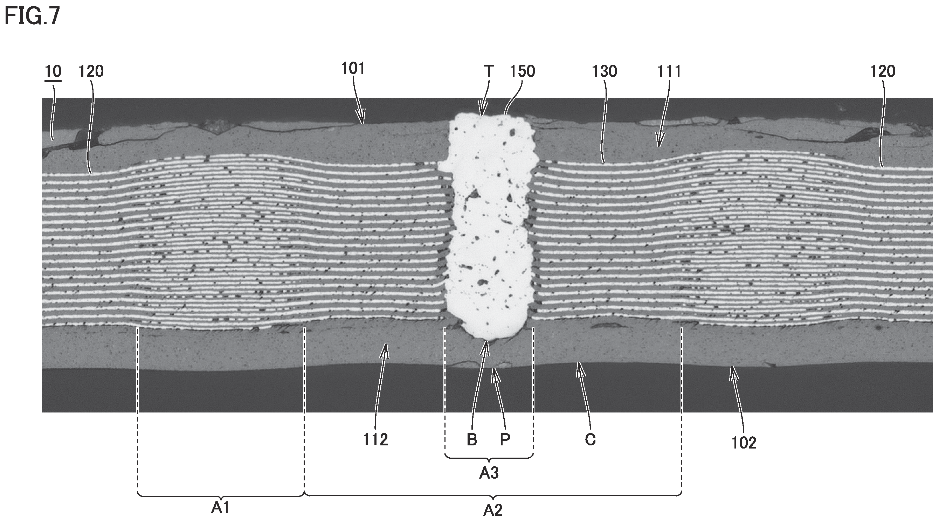

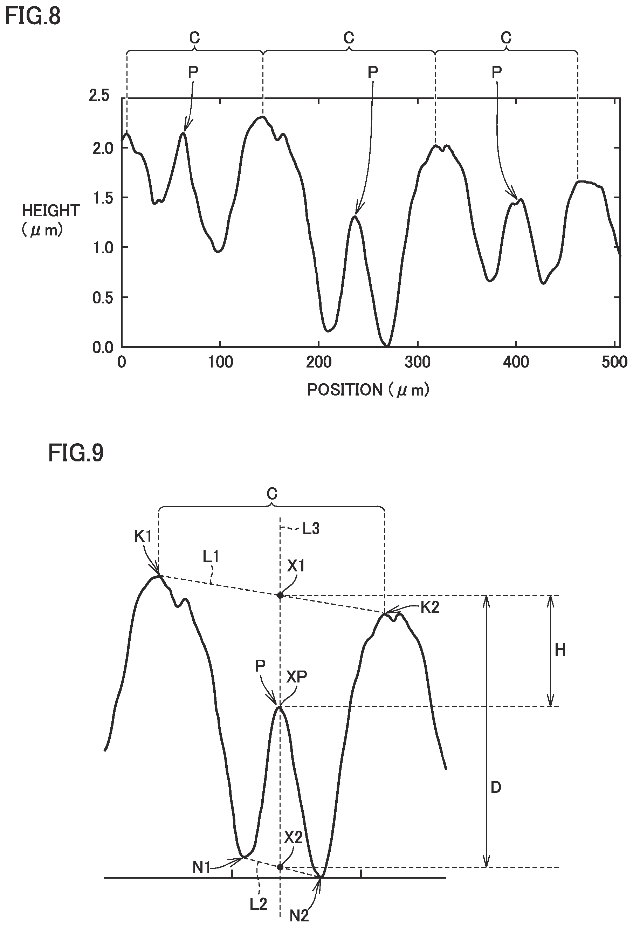

A multilayer ceramic capacitor according to an Example will be described below. Fig. 6 shows an image obtained by zoomed image capture of the second main surface of the multilayer ceramic capacitor according to Example. Fig. 7 shows an image obtained by zoomed image capture of a vertical cross-section of the multilayer ceramic capacitor along a line L shown in Fig. 6. Fig. 8 is a diagram showing transition of a height, with a position lowest in the recess in the second main surface being defined as a reference, in a section from a start point S to an end point F of line L shown in Fig. 6. **In** Fig. 8, the ordinate represents a height (µm) and the abscissa represents a position (µm) from start point S along line L.

The zoomed images shown in Figs. 6 and 7 were captured by a metallograph. A surface profile of the second main surface shown in Fig. 8 was measured by a digital microscope (VHX-8000) manufactured by Keyence Corporation. As shown in Fig. 6, when viewed from the direction of layering, the outer shape of the multilayer ceramic capacitor according to Example is a square shape and one side thereof has a length of 680 µm. Second via conductor 150 shown in Fig. 7 has a diameter of 23.4 µm, and it is within a range not smaller than 15 µm and not larger than 40 µm.

As shown in Fig. 7, second end surface B of second via conductor 150 is convexly curved toward second main surface 102 in the direction of layering. **In** second main surface 102, recess C recessed in the direction of layering is provided in second area A2, and projection P that projects in the direction of layering while it is located in recess C is formed in third area A3. Projection P is convexly curved as following second end surface B. As shown in Fig. 8, in a section from start point S to end point F of line L shown in Fig. 6, projection P is formed inside each of three recesses C.

Fig. 9 is a diagram for illustrating a method of measuring dimensional relation between a recess and a projection. Fig. 9 shows as being enlarged, deepest recess C located at the center among three recesses C shown in Fig. 8. As shown in Fig. 9, in the vertical cross-section, an opening end K1 and an opening end K2 of recess C may not match with each other in height, and positions of a bottom N1 and a bottom N2 of recess C may not match with each other in height.

In such a case, a dimension of a straight-line distance in the direction of layering between an intersection X1 between a line segment L1 that connects opening end K1 and opening end K2 to each other and straight line L3 that passes through a tip end XP of projection P while it extends in the direction of layering and an intersection X2 between a line segment L2 that connects bottom N1 and bottom N2 to each other and straight line L3 is defined as the dimension of maximum depth D of recess C in the direction of layering.

A dimension of a straight-line distance in the direction of layering between intersection X1 and tip end XP of projection P is defined as the dimension of straight-line distance H in the direction of layering between the tip end of projection P and the opening end of recess C.

As shown in Figs. 8 and 9, in Example, the height of opening end K1 is 2.31 µm, the height of opening end K2 is 2.02 µm, the height of bottom N1 is 0.16 µm, the height of bottom N2 is 0 µm, and the height of tip end XP of projection P is 1.31 µm. The height of intersection X1 is 2.17 µm and the height of intersection X2 is 0.08 µm.

The dimension of maximum depth D of recess C in the direction of layering is 2.09 µm, and it is within a range not smaller than 1 µm and not larger than 2.5 µm.

A dimension of straight-line distance H in the direction of layering between the tip end of projection P and the opening end of recess C is 0.86 µm, and it is within a range not larger than 1.25 µm.

The ratio of the dimension of straight-line distance H in the direction of layering between the tip end of projection P and the opening end of recess C to the dimension of maximum depth D of recess C in the direction of layering is 0.41, and it is within a range not higher than 0.5.

By satisfying a numerical range of the dimension and the dimensional relation above, the multilayer ceramic capacitor according to Example could achieve effective improvement in flatness of second main surface 102 where first via conductor 140 and second via conductor 150 are not exposed, and could be held in a stable manner by the suction nozzle brought in intimate contact with second main surface 102. The dimension and the dimensional relation above are preferably satisfied for all recesses C and projection P at any vertical cross-section.

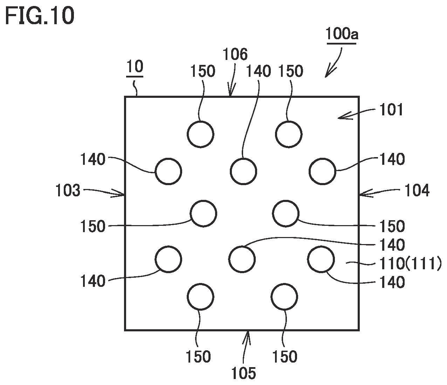

Arrangement of first via conductor 140 and second via conductor 150 is not limited to the arrangement shown in the embodiment and Example. Fig. 10 is a plan view of a multilayer ceramic capacitor according to a modification of one embodiment of the present invention viewed from the first main surface side. As shown in Fig. 10, in a multilayer ceramic capacitor 100a according to the modification of one embodiment of the present invention, a plurality of first via conductors 140 are arranged in a zigzag manner along a diagonal of the outer shape of first main surface 101 when viewed from the direction of layering. A plurality of second via conductors 150 are arranged in a zigzag manner along the diagonal of the outer shape of first main surface 101 when viewed from the direction of layering. First via conductors 140 and second via conductors 150 are arranged as being aligned in rows and columns. As the plurality of first via conductors 140 and the plurality of second via conductors 150 are alternately arranged in the zigzag manner as above, magnetic fields induced by currents that flow through first via conductors 140 and second via conductors 150 cancel each other, so that an equivalent series inductance (ESL) of multilayer ceramic capacitor 100a can be lowered.

### (Additional Aspects)

The illustrative embodiment described above is understood by a person skilled art as specific examples of aspects below.
<1> A multilayer ceramic capacitor includes
   a multilayer body including a plurality of first internal electrode layers and a plurality of second internal electrode layers alternately layered in a direction of layering with dielectric layers being interposed, the multilayer body including a first main surface and a second main surface, the second main surface being located opposite to the first main surface in the direction of layering,
   a plurality of first via conductors provided inside the multilayer body and electrically connected to the plurality of first internal electrode layers, and
   a plurality of second via conductors provided inside the multilayer body and electrically connected to the plurality of second internal electrode layers, wherein
   the multilayer body includes
      an inner layer portion in which opposing portions where the first internal electrode layers and the second internal electrode layers are opposed to each other are layered in the direction of layering,
      a first outer layer portion that defines the first main surface while the first outer layer portion is adjacent to the inner layer portion in the direction of layering, and
      a second outer layer portion that defines the second main surface while the second outer layer portion is adjacent to the inner layer portion in the direction of layering,
   a first end surface at a first main surface side of each of the plurality of first via conductors and the plurality of second via conductors is exposed at the first main surface,
   a second end surface at a second main surface side of each of the plurality of first via conductors and the plurality of second via conductors is covered with the second outer layer portion,
   the second end surface of at least one of the plurality of first via conductors and the plurality of second via conductors is convexly curved toward the second main surface in the direction of layering,
   in the second main surface, with an area superimposed on the inner layer portion in the direction of layering being defined as a first area, an area not superimposed on the inner layer portion in the direction of layering being defined as a second area, and an area superimposed on the at least one of the plurality of first via conductors and the plurality of second via conductors in the direction of layering being defined as a third area,
   a recess recessed in the direction of layering is provided in the second area, and
   a projection that projects in the direction of layering while the projection is located in the recess is formed in the third area.
<2> In the multilayer ceramic capacitor according to <1>,
   the projection is convexly curved as following the second end surface.
<3> In the multilayer ceramic capacitor according to <1> or <2>,
   a dimension of a maximum depth of the recess in the direction of layering is not smaller than 1 µm and not larger than 2.5 µm.
<4> In the multilayer ceramic capacitor according to <3>,
   a dimension of a straight-line distance in the direction of layering between a tip end of the projection and an opening end of the recess is equal to or smaller than 1.25 µm.
<5> In the multilayer ceramic capacitor according to <1> or <2>,
   a ratio of a dimension of a straight-line distance in the direction of layering between a tip end of the projection and an opening end of the recess to a dimension of a maximum depth of the recess in the direction of layering is equal to or lower than 0.5.
<6> In the multilayer ceramic capacitor according to any one of <1> to <5>,
   each of the plurality of first via conductors and the plurality of second via conductors has a diameter not smaller than 15 µm and not larger than 40 µm.

Features that can be combined may be combined with each other in the description of the embodiment and Example above.

It should be understood that the embodiment and Example disclosed herein are illustrative and non-restrictive in every respect. The scope of the present invention is defined by the terms of the claims rather than the description above and is intended to include any modifications within the scope and meaning equivalent to the terms of the claims.

### REFERENCE SIGNS LIST

10 multilayer body; 100 multilayer ceramic capacitor; 101 first main surface; 102 second main surface; 103 first side surface; 104 second side surface; 105 third side surface; 106 fourth side surface; 110 dielectric layer; 111 first outer layer portion; 112 second outer layer portion; 120 first internal electrode layer; 120h first through hole; 130 second internal electrode layer; 130h second through hole; 140 first via conductor; 150 second via conductor; A1 first area; A2 second area; A3 third area; B second end surface; C recess; E inner layer portion; F end point; H straight-line distance; K1, K2 opening end; N1, N2 bottom; P projection; S start point; T first end surface; X1, X2 intersection; XP tip end.

## Claims

1. A multilayer ceramic capacitor comprising:
a multilayer body including a plurality of first internal electrode layers and a plurality of second internal electrode layers alternately layered in a direction of layering with dielectric layers being interposed, the multilayer body including a first main surface and a second main surface, the second main surface being located opposite to the first main surface in the direction of layering;
a plurality of first via conductors provided inside the multilayer body and electrically connected to the plurality of first internal electrode layers; and
a plurality of second via conductors provided inside the multilayer body and electrically connected to the plurality of second internal electrode layers, wherein
the multilayer body includes
an inner layer portion in which opposing portions where the first internal electrode layers and the second internal electrode layers are opposed to each other are layered in the direction of layering,
a first outer layer portion that defines the first main surface while the first outer layer portion is adjacent to the inner layer portion in the direction of layering, and
a second outer layer portion that defines the second main surface while the second outer layer portion is adjacent to the inner layer portion in the direction of layering,
a first end surface at a first main surface side of each of the plurality of first via conductors and the plurality of second via conductors is exposed at the first main surface,
a second end surface at a second main surface side of each of the plurality of first via conductors and the plurality of second via conductors is covered with the second outer layer portion,
the second end surface of at least one of the plurality of first via conductors and the plurality of second via conductors is convexly curved toward the second main surface in the direction of layering,
in the second main surface, with an area superimposed on the inner layer portion in the direction of layering being defined as a first area, an area not superimposed on the inner layer portion in the direction of layering being defined as a second area, and an area superimposed on the at least one of the plurality of first via conductors and the plurality of second via conductors in the direction of layering being defined as a third area,
a recess recessed in the direction of layering is provided in the second area, and
a projection that projects in the direction of layering while the projection is located in the recess is formed in the third area.

2. The multilayer ceramic capacitor according to claim 1, wherein
the projection is convexly curved as following the second end surface.

3. The multilayer ceramic capacitor according to claim 1 or 2, wherein
a dimension of a maximum depth of the recess in the direction of layering is not smaller than 1 µm and not larger than 2.5 µm.

4. The multilayer ceramic capacitor according to claim 3, wherein
a dimension of a straight-line distance in the direction of layering between a tip end of the projection and an opening end of the recess is equal to or smaller than 1.25 µm.

5. The multilayer ceramic capacitor according to claim 1 or 2, wherein
a ratio of a dimension of a straight-line distance in the direction of layering between a tip end of the projection and an opening end of the recess to a dimension of a maximum depth of the recess in the direction of layering is equal to or lower than 0.5.

6. The multilayer ceramic capacitor according to any one of claims 1 to 5, wherein
each of the plurality of first via conductors and the plurality of second via conductors has a diameter not smaller than 15 µm and not larger than 40 µm.
